# EUROPEAN PATENT SPECIFICATION

(11) **EP 1 628 214 B1**
(45) Date of publication and mention of the grant of the patent: **23.06.2010**
(21) Application number: 05105586.1
(22) Date of filing: 23.06.2005
(51) Int. Cl.: G06F 9/455

(54) **Systems and methods for implementing an operating system in a virtual machine environment**
Vorrichtungen und Verfahren zum Ausführen eines Betriebssystems in einer virtuellen Maschine Umgebung
Dispositifs et procédés pour implémenter un système d'exploitation dans un environnement de machine virtuelle

(30) Priority: 30.06.2004 US 882979
(43) Date of publication of application: 22.02.2006
(73) Proprietor: MICROSOFT CORPORATION, Redmond, WA 98052 (US)
(72) Inventor: Vega, Rene Antonio, Redmond, WA 98052 (US); Traut, Eric P., Redmond, WA 98052 (US); Neil, Mike, Redmond, WA 98052 (US)
(74) Representative: Grünecker, Kinkeldey, Stockmair & Schwanhäusser Anwaltssozietät

(56) References cited:
- EP-A- 1 524 596
- EP-A2- 1 059 582
- US-A1- 2003 037 089
- WHITAKER A ET AL: "DENALI: LIGHTWEIGHT VIRTUAL MACHINES FOR DISTRIBUTED AND NETWORKED APPLICATIONS" PROCEEDINGS OF THE USENIX ANNUAL TECHNICAL CONFERENCE, June 2002 (2002-06), pages 1-14, XP001188148
- TAKUHIRO K: "MMX support patch etc. for xmms" INTERNET ARTICLE, [Online] 7 July 2001 (2001-07-07), pages 1-6, XP002450489 Retrieved from the Internet: URL:http://web.archive.org/web/20010707033 254/http://members.jcom.home.ne.jp/jacobi/ linux/xmms.html> [retrieved on 2007-09-10]
- HOLZ T ET AL: "Detecting honeypots and other suspicious environments" PROCEEDINGS FROM THE SIXTH ANNUAL IEEE SYSTEMS, MAN AND CYBERNETICS (SMC) INFORMATION ASSURANCE WORKSHOP (IEEE CAT. NO. 05EX1123) IEEE PISCATAWAY, NJ, USA, 2005, pages 29-36, XP002450490 ISBN: 0-7803-9290-6
- MAGENHEIMER D ET AL: "vBlades: Optimized Paravirtualization for the Itanium Processor Family" PROCEEDINGS OF THE THIRD VIRTUAL MACHINE RESEARCH AND TECHNOLOGY SYMPOSIUM, 6 May 2004 (2004-05-06), pages 1-11, San Jose, CA, USA

## Description

### CROSS-REFERENCE

This application is related by subject matter to the inventions disclosed in the following commonly assigned applications: U.S. Patent Application No. 10/685,051 (Atty. Docket No. MSFT-2570 / 305147.01), filed on October 14, 2003 and entitled, "SYSTEMS AND METHODS FOR USING SYNTHETIC INSTRUCTIONS IN A VIRTUAL MACHINE"; U.S. Patent Application No. 10/734,450 (Atty. Docket No. MSFT-2772 / 305423.01), filed on December 12, 2003 and entitled "SYSTEMS AND METHODS FOR BIMODAL DEVICE VIRTUALIZATION OF ACTUAL AND IDEALIZED HARDWARE-BASED DEVICES"; and U. S. Patent Application No. 10/274,298 (Atty. Docket No. MSFT-2564 / 304108.01), filed on October 18, 2002 and entitled, "SOFTWARE LICENSE ENFORCEMENT MECHANISM FOR AN EMULATED COMPUTING ENVIRONMENT,"

### FIELD OF THE INVENTION

The present invention generally relates to the field virtual machines (also known as "processor virtualization") and software that executes in a virtual machine environment. More specifically, the present invention relates to systems and methods for implementing an operating system that is able to ascertain whether it is running in a virtual machine environment and that is able to modify its behavior accordingly.

### BACKGROUND OF THE INVENTION

Computers include general purpose central processing units (CPUs) that are designed to execute a specific set of system instructions. A group of processors that have similar architecture or design specifications may be considered to be members of the same processor family. Examples of current processor families include the Motorola 680X0 processor family, manufactured by Motorola, Inc. of Phoenix, Arizona; the Intel 80X86 processor family, manufactured by Intel Corporation of Sunnyvale, California; and the PowerPC processor family, which is manufactured by Motorola, Inc. and used in computers manufactured by Apple Computer, Inc. of Cupertino, California. Although a group of processors may be in the same family because of their similar architecture and design considerations, processors may vary wi dely within a family according to their clock speed and other performance parameters.

Each family of microprocessors executes instructions that are unique to the processor family. The collective set of instructions that a processor or family of processors can ex ecute is known as the processor's instruction set. As an example, the instruction set used by the Intel 80X86 processor family is incompatible with the instruction set used by the PowerPC processor family. The Intel 80X86 instruction set is based on the Complex Instruction Set Computer (CISC) format. The Motorola PowerPC instruction set is based on the Reduced Instruction Set Computer (RISC) farmat. CISC processors use a large number of instructions, some of which can perform rather complicated functions, but which require generally many clock cycles to execute. RISC processors use a smaller number of available instructions to perform a simpler set of functions that are executed at a much higher rate.

The uniqueness of the processor family among computer systems also typically results in incompatibility among the other elements of hardware architecture of the computer systems. A computer system manufactured with a processor from the Intel 80X86 processor family will have a hardware architecture that is different from the hardware architecture of a computer system manufactured with a processor from the PowerPC processor family. Because of the uniqueness of the processor instruction set and a computer system's hardware architecture, application software programs are typically written to run on a particular computer system running a particular operating system.

Computer manufacturers want to maximize their market share by having more rather than fewer applications run on the microprocessor family associated with the computer manufacturers' product line. To expand the number of operating systems and application programs that can run on a computer system, a field of technology has developed in which a given computer having one type of CPU, called a host, will include an emulator program that allows the host computer to emulate the instructions of an unrelated type of CPU, called a guest. Thus, the host computer will execute an application that will cause one or more host instructions to be called in response to a given guest instruction. Thus the host computer can both run software design for its own hardware architecture and software written for computers having an umrelated hardware architecture. As a more specific example, a computer system manufactured by Apple Computer, for example, may run operating systems and program written for PC-based computer systems. It may also be possible to use an emulator program to operate concurrently on a single CPU multiple incompatible operating systems. In this arrangement, although each operating system is incompatible with the other, an emulator program can host one of the two operating systems, allowing the otherwise incompatible operating systems to run concurrently on the same computer system.

When a guest computer system is emulated on a host computer system, the guest computer system is said to be a "virtual machine" as the guest computer system only exists in the host computer system as a pure software representation of the operation of one specific hardware architecture. The terms emulator, virtual machine, and processor emulation are sometimes used interchangeably to denote the ability to mimic or emulate the hardware architecture of an entire computer system. As an example, the Virtual PC software created by Connectix Corporation of San Mateo, California emulates an entire computer that includes an Intel 80X86 Pentium processor and various motherboard components and cards. The operation of these components is emulated in the virtual machine that is being run on the host machine. An emulator program executing on the operating system software and hardware architecture of the host computer, such as a computer system having a PowerPC processor, mimics the operation of the entire guest computer system.

The emulator program acts as the interchange between the hardware architecture of the host machine and the instructions transmitted by the software running within the emulated environment. This emulator program may be a host operating system (HOS), which is an operating system running directly on the physical computer hardware. Alternately, the emulated environment might also be a virtual machine monitor (VMM) which is a software layer that runs directly above the hardware and which virtualizes all the resources of the machine by exposing interfaces that are the same as the hardware the VMM is virtualizing (which enables the VMM to go unnoticed by operating system layers running above it). A host operating system and a VMM may run side-by-side on the same physical hardware.

Current virtual machine software (such as Virtual Server and Virtual PC, sold by Microsoft Corporation) allow for virtualization as described above, but there is significant performance overhead associated with allowing for virtualization. The performance overhead can reach levels as high as 70%, particularly in software applications with heavy I/O workloads (with heavy disk access or network communications). This level of overhead is unacceptable in applications that require maximum processor speed. What is needed is a way to reduce processor overhead in a virtual machine environment.

In conventional operating systems (OSs), certain OS activities are performed with an assumption that the operating system is running on dedicated physical hardware. In a virtual machine environment, these activities can be detrimental to the other guest OSs that are running concurrently on the same physical hardware. These detrimental activities tie up operating system resources (designed to run on dedicated physical hardware, not in a virtual environment), because the operating system assumes that the hardware is dedicated to it, and has no knowledge of other operating systems using the resources or waiting to use them. What is needed is a way to modify the behavior of a guest OS such that it is not detrimental to other guest OSs that are running in a virtual machine environment. Pages 1-14 of the Proceedings of the Usemix Annual Technical Conference (June 2002) disclose Denali, lightweight virtual machines for distributed and networked applications.

### SUMMARY OF THE INVENTION

The invention refers to the method of claim 1, the system of claim 7 and the computer-readable medium of claim 13. Preferred embodiments are disclosed in the dependent claims. The present invention includes systems for and methods of implementing an operating system that is capable of ascertaining whether it is operating in a virtual machine environment and is further capable of modifying its behavior to operate more efficiently in a vi rtual machine environment.

Embodiments of the present invention are directed to a system for and method of providing operating systems that are aware that they are operating in a virtual machine environment and, as a result of this realization, are able to reduce some of the performance overhead which has been historically problematic with the virtual machine environment. The introduction of a shared communication area between the host operating system and the guest operating systems provides a mechanism for communication between guests and host without passing control of the computer between host and guests. One example of the type of communications passed between guest operating systems and host relates to thread scheduling. With the realization that the guest is operating in a VM environment and with the introduction of the shared communications area, guest operating systems send additional information (such as execution priorities) to the host operating system, which allows the host operating system to make more-efficient thread scheduling decisions, because the host has more information regarding the overall demand (including that of guests) for processor time.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Fig. 1 is a block diagram representing a computer system in which aspects of the present invention may be incorporated;

Fig. 2 illustrates the logical layering of the hardware and software architecture for an emulated operating environment in a computer system;

Fig. 3A illustrates a virtualized computing system;

Fig. 3B illustrates an alternative embodiment of a virtualized computing system comprising a virtual machine monitor running alongside a host operating system;

Fig. 4 illustrates a virtualized computing system from Fig. 3A further comprising a host operating system with VM-aware guest operating systems;

Fig. 5 is a flowchart that illustrates a method of implementing a VM-aware guest operating system with the capability to modify its behavior in order to improve efficiency in a virtual machine environment;

Fig. 6 illustrates an exemplary virtualized computing system comprising a host operating system with shared communication areas between the host operating system and VM-aware guest operating systems; and

Fig. 7 is a flowchart that illustrates an exemplary method of scheduling threads in a VM-aware operating system according to the present invention.

### DETAILED DESCRIPTION OF ILLUSTRATIVE EMBODIMENTS

The inventive subject matter is described with specificity to meet statutory requirements. However, the description itself is not intended to limit the scope of this patent. Rather, the inventor has contemplated that the claimed subject matter might also be embodied in other ways, to include different steps or combinations of steps similar to the ones described in this document, in conjunction with other present or future technotogies. Moreover, although the term "step" may be used herein to connote different elements of methods employed, the term should not be interpreted as implying any particular order among or between various steps herein disclosed unless and except when the order of individual steps is explicitly described.

### Computer Environment

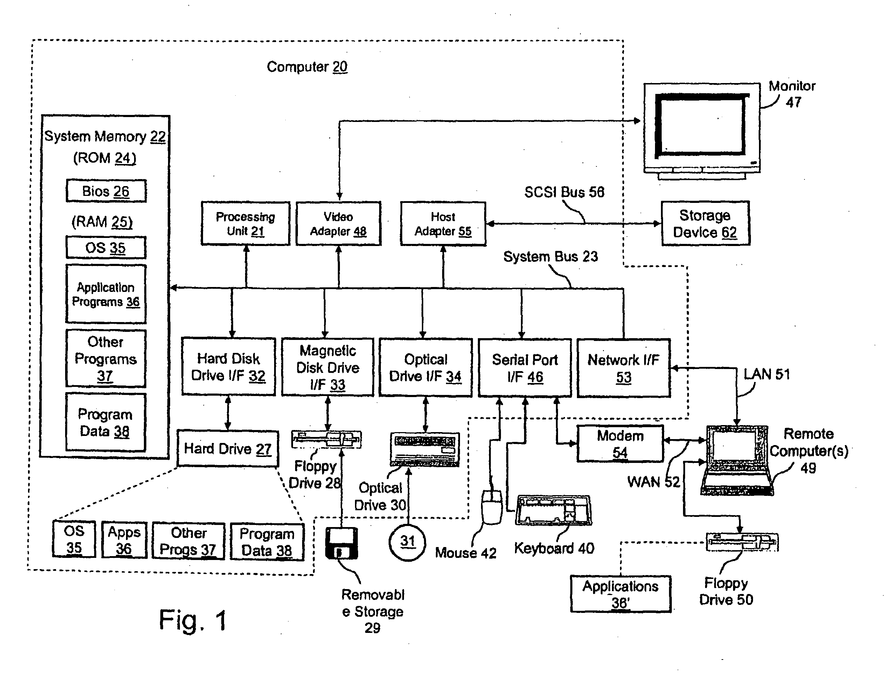

Numerous embodiments of the present invention may execute on a computer. Fig. 1 and the following discussion is intended to provide a brief general description of a suitable computing environment in which the invention may be implemented. Although not required, the in vention will be described in the general context of computer executable instructions, such as program modules, being executed by a computer, such as a client workstation or a server. Generally, program modules include routines, programs, objects, components, data structures and the like that perform particular tasks or implement particular abstract data types. Moreover, those skilled in the art will appreciate that the invention may be practiced with other computer system configurations, including hand held devices, multi processor systems, microprocessor based or programmable consumer electronics, network PCs, minicomputers, mainframe computers and the like. The invention may also be practiced in distributed computing environments where tasks are performed by remote processing devices that are linked through a communications network. In a distributed computing environment, program modules may be located in both local and remote memory storage devices.

As shown in Fig. 1, an exemplary general purpose computing system includes a conventional personal computer 20 or the like, including a processing unit 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system 26 (BIOS), containing the basic routines that help to transfer information between elements within the personal computer 20, such as during start up, is stored in ROM 24. The personal computer 20 may further include a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer readable media provide non volatile storage of computer readable instructions, data structures, program modules and other data for the personal computer 20. Although the exemplary environment described herein employs a hard disk, a removable magnetic disk 29 and a removable optical disk 31, it should be appreciated by those skilled in the art that other types of computer readable media which can store data that is accessible by a computer, such as magnetic cassettes, flash memory cards, digital video disks, Bernoulli cartridges, random access memories (RAMs), read only memories (ROMs) and the like may also be used in the exemplary operating environment.

A number of program modules may be stored on the hard disk, magnetic disk 29, optical disk 31, ROM 24 or RAM 25, including an operating system 35, one or more application programs 36, other program modules 37 and program data 38. A user may enter commands and information into the personal computer 20 through input devices such as a keyboard 40 and pointing device 42. Other input devices (not shown) may include a microphone, joystick, game pad, satellite disk, scanner or the like. These and other input devices are often connected to the processing unit 21 through a serial port interface 46 that is coupled to the system bus, but may be connected by other interfaces, such as a parallel port, game port or universal serial bus (USB). A monitor 47 or other type of display device is also connected to the system bus 23 via an interface, such as a video adapter 48. In addition to the monitor 47, personal computers typically include other peripheral output devices (not shown), such as speakers and printers. The exemplary system of Fig. 1 also includes a host adapter 55, Small Computer System Interface (SCSI) bus 56, and an external storage device 62 connected to the SCSI bus 56.

The personal computer 20 may operate in a networked environment using logical connections to one or more remote computers, such as a remote computer 49. The remote computer 49 may be another personal computer, a server, a router, a network PC, a peer device or other common network node, and typically includes many or all of the elements described above relative to the personal computer 20, although only a memory storage device 50 has been illustrated in Fig. 1. The logical connections depicted in Fig. 1 include a local area network (LAN) 51 and a wide area network (WAN) 52. Such networking environments are commonplace in offices, enterprise wide computer networks, intranets and the Internet.

When used in a LAN networking environment, the personal computer 20 is connected to the LAN 51 through a network interface or adapter 53. When used in a WAN networking environment, the personal computer 20 typically includes a modem 54 or other means for establishing communications over the wide area network 52, such as the Internet. The modem 54, which may be internal or external, is connected to the system bus 23 via the serial port interface 46. In a networked environment, program modules depicted relative to the personal computer 20, or portions thereof, may be stored in the remote memory storage device. It will be appreciated that the network connections shown are exemplary and other means of establishing a communications link between the computers may be used. Moreover, while it is envisioned that numerous embodiments of the present invention are particularly well-suited for computerized systems, nothing in this document is intended to limit the invention to such embodiments.

### Virtual Machines

From a conceptual perspective, computer systems generally comprise one or more layers of software running on a foundational layer of hardware. This layering is done for reasons of abstraction. By defining the interface for a given layer of software, that layer can be implemented differently by other layers above it. In a well-designed computer system, each layer only knows about (and only relies upon) the immediate layer beneath it. This allows a layer or a "stack" (multiple adjoining layers) to be replaced without negatively impacting the layers above said layer or stack. For example, software applications (upper layers) typically rely on lower levels of the operating system (lower layers) to write files to some form of permanent storage, and these applications do not need to understand the difference between writing data to a floppy disk, a hard drive, or a network folder. If this lower layer is replaced with new operating system components for writing files, the operation of the upper layer software applications remains unaffected.

The flexibility of layered software allows a virtual machine (VM) to present a virtual hardware layer that is in fact another software layer. In this way, a VM can create the illusion for the software layers above it that said software layers are running on their own private computer system, and thus VMs can allow multiple "guest systems" to run concurrently on a single "host system."

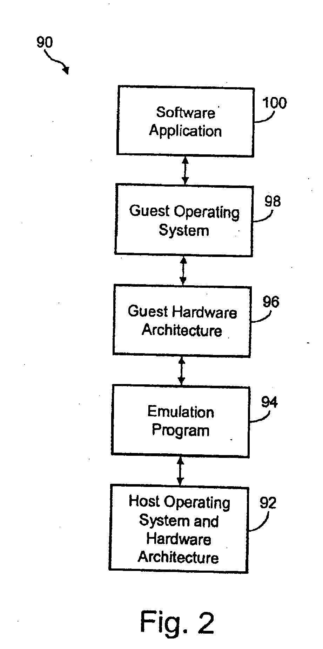

Fig. 2 is a diagram representing the logical layering of the hardware and software architecture for an emulated operating environment in a computer system. An emulation program 94 runs on a host operating system and/or hardware architecture 92. Emulation program 94 emulates a guest hardware architecture 96 and a guest operating system 98. Software application 100 in turn runs on guest operating system 98. In the emulated operating environment of Fig. 2, because of the operation of emulation program 94, software application 100 can run on the computer system 90 even though software application 100 is designed to run on an operating system that is generally incompatible with the host operating system and hardware architecture 92.

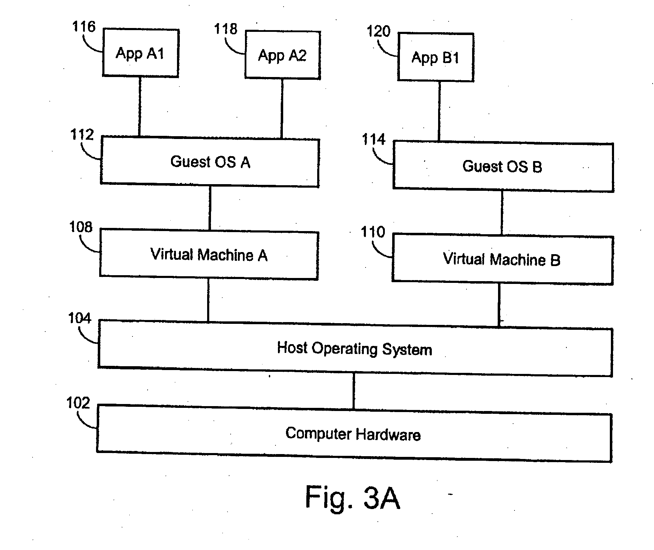

Fig. 3A illustrates a virtualized computing system comprising a host operating system software layer 104 running directly above physical computer hardware 102, and the host operating system (host OS) 104 virtualizes all the resources of the machine by exposing interfaces that are the same as the hardware the host OS is virtualizing (which enables the host OS to go unnoticed by operating system layers running above it).

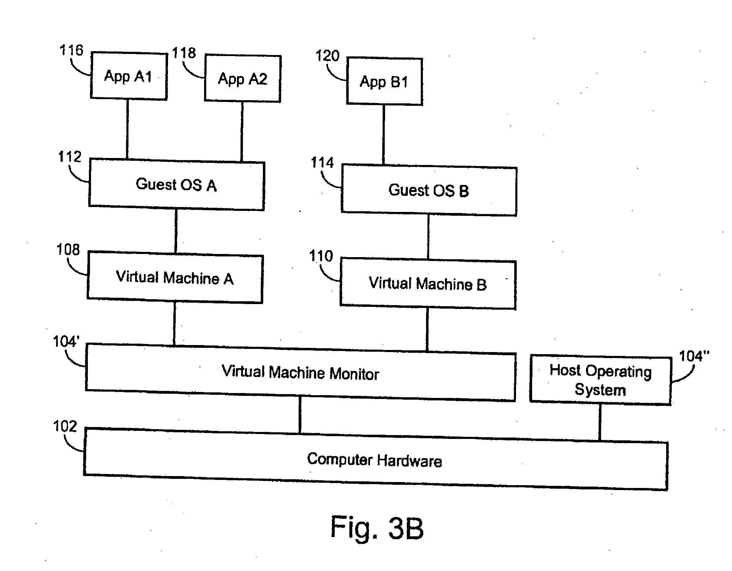

Alternately, a virtual machine monitor, or VMM, software layer 104' may be running in place of or alongside a host OS 104", the latter option being illustrated in Fig. 3B. For simplicity, all discussion hereinafter (specifically regarding the host OS 104) shall be directed to the embodiment illustrated in Fig. 3A; however, every aspect of such discussion shall equally apply to the embodiment of Fig. 3B wherein the VMM 104' of Fig. 3B essentially replaces, on a functional level, the role of the host OS 104 of Fig. 3A described herein below.

In regard to Fig. 3, it is important to note that VM A 108 and VM B 110 are virtualized computer hardware representations that exist only as software constructions and which are made possible due to the presence of specialized software code that not only presents VMA 108 and VM B 110 to Guest OS A 112 and Guest OS B 114 respectively, but which also performs all of the software steps necessary for Guest OS A 112 and Guest OS B 114 to indirectly interact with the real physical computer hardware 102. This complete functionality can generally be referred to as a virtual machine monitor (VMM) (shown only in Fig. 3B) where, for certain embodiments (such as the one illustrated in Fig. 3A), the VMM comprises part of the host operating system 104. However, in other embodiments (not shown) the VMM may be an application running above the host operating system 104 and interacting with the computer hardware only through said host operating system 104. In yet other embodiments (such as shown in Fig. 3B), the VMM may comprise a partially independent software system that on some levels interacts indirectly with the computer hardware 102 via the host operating system 104 but on other levels the VMM interacts directly with the computer hardware 102 (similar to the way the host operating system interacts directly with the computer hardware). And in yet other embodiments (similar to that shown in Fig. 3B), the VMM may comprise a fully independent software system that on all levels interacts directly with the computer hardware 102 (similar to the way the host operating system interacts directly with the computer hardware) without utilizing the host operating system 104 (although still interacting with said host operating system 104 insofar as coordinating use of said computer hardware 102 and avoiding conflicts and the like).

All of these variations for implementing the VMM are anticipated to form alternative embodiments of the present invention as described herein, and nothing herein should be interpreted as limiting the invention to any particular VMM configuration. In addition, any reference to interaction between applications 116, 118, and 120 via VM A 108 and/or VM B 110 respectively (presumably in a hardware emulation scenario) should be interpreted to be in fact an interaction between the applications 116, 118, and 120 and a VMM. Likewise, any reference to interaction between applications VM A 108 and/or VM B 110 with the host operating system 104 and/or the computer hardware 102 (presumably to execute computer instructions directly or indirectly on the computer hardware 102) should be interpreted to be in fact an interaction between the VMM and the host operating system 104 or the computer hardware 102 as appropriate.

Referring again to Fig. 3A, above the host OS 104 (or VMM 104') are two virtual machine (VM) implementations, VM A 108, which may be, for example, a virtualized Intel 386 processor, and VM B 110, which may be, for example, a virtualized version of one of the Motorola 680X0 family of processors. Above each VM A 108 and 110 are guest operating systems (guest OSs) A 112 and B 114 respectively. Above guest OS A 112 are running two applications, application A1 116 and application A2 118, and above guest OS B 114 is application B1 120.

Historically, virtual machines have been based upon the illusion that guest OSs (e.g., guest OS A 112) are running on dedicated hardware, when in fact they are sharing the hardware with other guest OSs (e.g., guest OS B 114). Host OS 104 is responsible for maintaining this illusion. The present invention relaxes this illusion and allows the guest OSs to ascertain whether they are running in a VM, and, subsequently, to alter their behavior, based on this realization. Behavior modifications are described that will increase the efficiency of guest QSs operating in a VM environment.

### Operating in a VM Environment

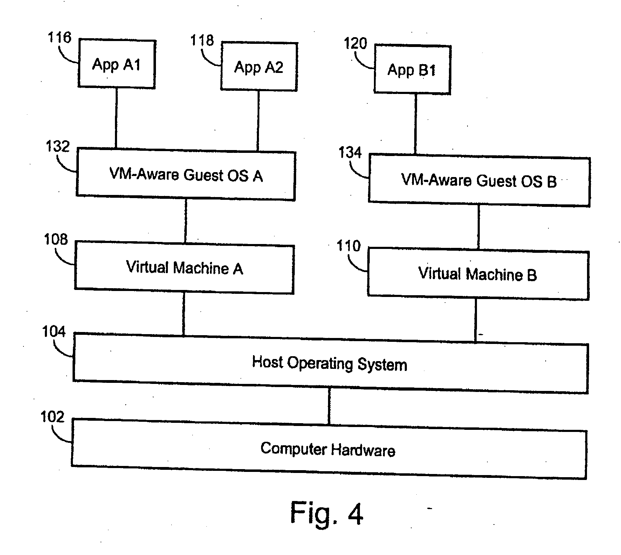

Fig. 4 illustrates a virtualized computing system similar to that shown in Fig. 3A, but in Fig. 4, a VM-aware guest OS A 132 and a VM-aware guest OS B 134 have replaced guest OS A 112 and guest OS B 114, respectively. VM-aware guest OS A 132 and VM-aware guest OS B 134 are operating systems that are able to ascertain whether they are operating in a virtual machine environment and, if so, are able to modify their behavior to operate more efficiently.

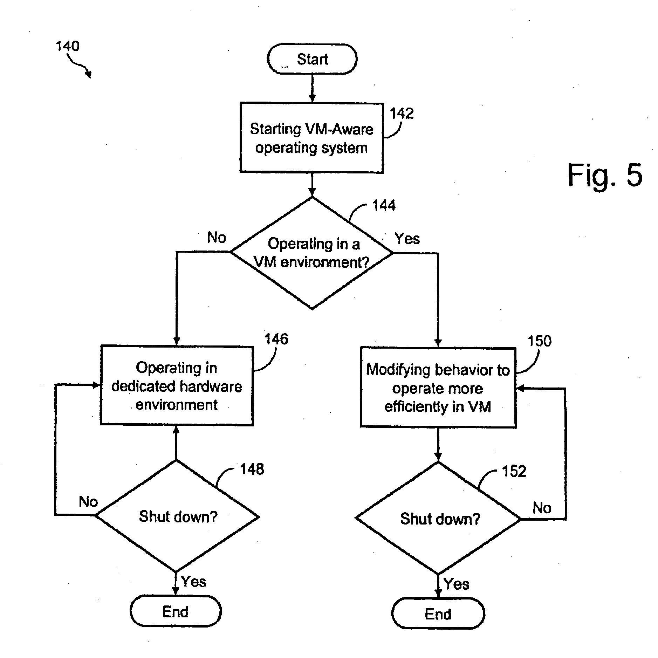

The operation of VM-aware guest OS A 132 and VM-aware guest OS B 134 of Fig. 4 is described in reference to Fig. 5, which is a flowchart that illustrates a method 140 of implementing a VM-aware operating system with the capability to modify its behavior in order to improve efficiency in a virtual machine environment. At step 142, the method first comprises starting the VM-aware operating system (e.g., VM-aware guest OS A 132 or VM-aware guest OS B 134).

At step 144, the VM-aware OS determines whether it is operating in a VM environment. This determination is done by any of a variety of methods, including the use of synthetic instructions, as described in U.S. Patent Application No. 10/685,051 filed on October 14, 2003and entitled, "SYSTEMS AND METHODS FOR USING SYNTHETIC INSTRUCTIONS IN A VIRTUAL MACHINE" (hereinafter the '051 patent application). The '051 patent application describes a method for an operating system to determine whether it is running on a virtualized processor or running directly on an x86 processor, by executing a synthetic instruction (e.g., VMCPUID) for returning a value representing an identity for the central processing unit. If a value is returned, the guest OS concludes that the operating system is running on a virtualized processor; if an exception occurs in response to the synthetic instruction, the guest OS concludes that the operating system is running directly on an x86 processor. Another method for determining whether the guest OS is running in a VM environment include running a series of tests threads and comparing performance of the current environment to historical results. In any event, if the VM-aware OS determines that it is not operating in a VM environment, method 140 proceeds to step 146. Alternatively, if the VM-aware OS determines that it is operating in a VM environment, method 140 proceeds to step 150.

At step 146, the VM-aware OS operates in its "traditional" manner, because it is operating on dedicated hardware and is not in a VM environment. At step 148, the VM-aware operating system determines whether a "shut down" command has been received. If a "shut down" command is received, the VM-aware OS shuts down and method 130 ends. If no "shut down" command has been received, the VM-aware OS continues to operate in the "traditional" manner, as described in step 146.

At step 150, the VM-aware OS modifies its behavior in order to operate more efficiently in a VM environment. Examples of behavior modifications include, but are not limited to, 1) thread scheduling; and 2) utilizing synthetic instructions (as in the '051 patent application) that contain the execution priorities to host OS 104. VM "synthetic instructions" are otherwise-illegal processor instructions that have special meanings to the VM.

At step 152, the VM-aware OS determines whether a "shut down" command has been received. If a "shut down" command is received, the VM-aware OS shuts down and method 130 ends. If no "shut down" command has been received, the VM-aware OS continues to operate in its modified, high-efficiency mode, as described in step 150.

### Scheduling Example

In operating systems, a scheduler assigns processors to an execution context or thread. The scheduler reviews all ready threads and then schedules the threads for processing. If there is no work to be done, the scheduler loops while looking for work for a period of time before finally entering a busy-wait zone. When operating systems are not operating in a virtual machine, this behavior is not detrimental to performance. However, in a virtual machine environment, this behavior is detrimental to other guest operating systems that have work ready, but for which the processor is occupied. This looping and busy-waiting time contributes to the high-overhead level associated with running operating systems in a virtual machine environment.

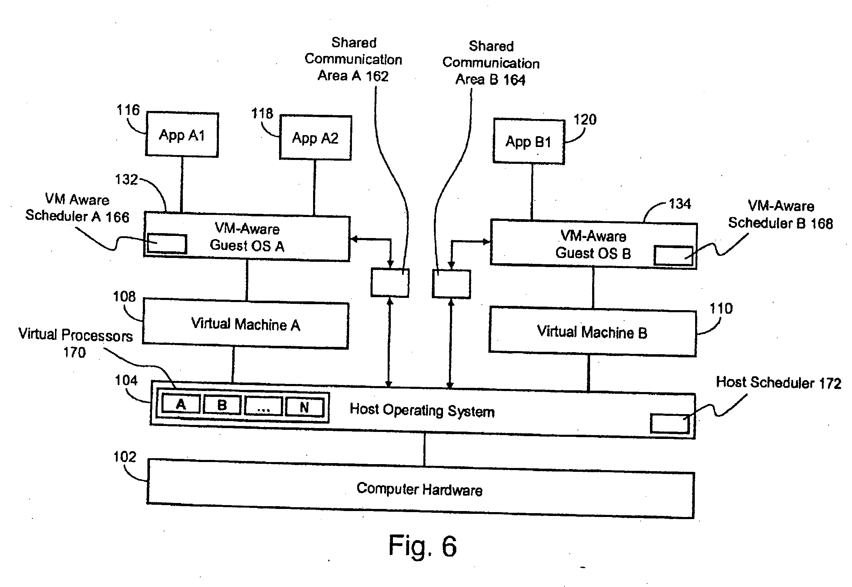

The example shown in Fig. 6 is an exemplary system and method for behavior modification. However, the present invention is not limited to thread scheduling behavior modifications.

Fig. 6 illustrates a virtualized computing system comprising a shared communication area A 162 arranged between host OS 104 and VM-aware guest OS A 132. Similarly, a shared communication area B 164 is arranged between host OS 104 and VM-aware guest OS B 134. This virtualized computing system provides a way for guest OSs to operate more efficiently. In a scheduling example, the virtualized computing system described in Fig. 6 includes a way for a guest OS to provide additional thread information (such as information regarding the priority of thread and expected duration of time for the thread to run). When this information is combined with information from other guest OSs, the host OS has a much clearer picture of all of the demand for resources within the system and is, therefore, able to make decisions that will greatly improve the efficiency of the system.

Shared communication areas A 162 and B 164 are mechanisms which provide VM-aware guest OS A 132 and VM-aware guest OS B 134 an efficient way to transfer information to host OS 104 without passing control to host OS 104. Passing control to host OS 104 is time consuming, therefore detrimental to overall system performance, and therefore to be avoided, if possible. In one example, shared communication area A 162 and shared communication area B 164 are embodied with shared memory space. In another example, shared communication area A 162 and shared communication area B 164 are embodied by a direct communications link between VM-aware guest OS A 132 and VM-aware guest OS B 134, respectively.

VM-aware guest OS A 132 and VM-aware guest OS B 134 further contain a VM-aware scheduler A 166 and a VM-aware scheduler B 168, respectively. VM-aware schedulers A 166 and B 168 operate on a set of ready threads that have execution properties (such as priority, deadline, and reserve (a portion of processor assigned to a thread). The execution properties are placed into shared communication areas A 162 and B 164.

The virtualized computing system described in Fig. 6 further includes a host scheduler 172 within host OS 104. Host scheduler 172 makes scheduling decisions that are more efficient, based on two new features of the system: first, VM-aware guest OS A 132 and VM-aware guest OS B 134 are aware that they are operating in a VM environment and are able to send execution priorities to host scheduler 172 to enable more-efficient execution of all threads from a plurality of VM-aware guest OSs; second, shared communication areas A 162 and B 164 provide an efficient way to send information to host OS 104 without passing control to host OS 104.

Host scheduler 172 assigns a plurality of virtual processors 170A-170N to process the threads, according to the execution priorities placed into shared communication areas A 162 and B 164. Host scheduler 172 reviews the execution priorities for all VM-aware guest OSs (e.g., VM-aware guest OS A 132 and VM-aware guest OS B 134), creates a composite run-list based on the priorities from all VM-aware guests OSs, and assigns virtual processors 170 to process the threads accordingly.

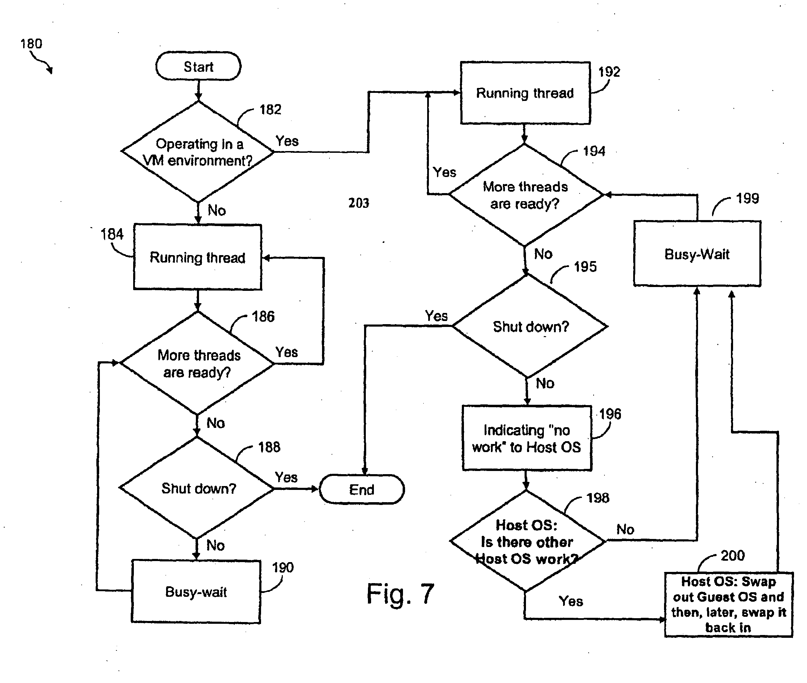

The operation of the VM-aware guest OSs of Fig. 6 is described in reference to Fig. 7, which is a flowchart that illustrates an exemplary method 180 of scheduling threads in an operating system in accordance with the invention. At step 182, the method starts with the VM-aware guest OS A 132 determining whether it is operating in a VM environment. This determination is done by any of a variety of methods including but not limited to the use of synthetic instructions as described in the '051 application (described above). If yes, method 180 proceeds to step 192; if no, method 180 proceeds to step 184.

At step 184―which is a default operating mode for an operating system on dedicated hardware―VM-aware guest OS A 132 processes a thread. At step 186, VM-aware guest OS A 132 determines whether more threads are ready to be processed, If yes, method 180 returns to step 184; if not, method 180 proceeds to step 188. At step 188, VM-aware guest OS A 132 determines whether a "shut down" command has been received; if so, VM-aware guest OS A, 132 shuts down and method 180 ends; if no "shut down" command has been received, method 180 proceeds to step 190. At step 190, VM-aware guest OS A 132 enters a busy-wait status while it waits for more threads to be processed and, after a specified amount of time, method 180 returns to step 186 for the guest OS A 132 to check for more threads to process.

At step 192, VM-aware guest OS A 132―which is operating now operating in an enhanced "VM-aware" mode-starts by processing a thread and then, at step 194, VM-aware guest OS A 132 determines whether more threads are ready to be processed. If yes, method 180 returns to step 192 for further processing; if not, method 180 proceeds to step 195. At step 195, guest OS A 132 determines whether a "shut down" command has been received and, if so, guest OS A shuts down and method 180 ends; if not, then at step 196, VM-aware guest OS A 132 indicates to host OS 104 (or, for certain alternative embodiments, to VMM 104') that guest OS A 132 currently has no work to do (that is, no threads to process). In one example, this indication is sent by VM-aware guest OS A 132 via shared communications area A 162 as described above. In another example, this indication is performed by VM-aware guest OS A 132 sending a synthetic instruction to host OS 104 (which is programmed to understand said synthetic instruction, of course) and then, at step 198, host OS 104 determines whether work from other VMs is ready to be processed.

If VM-aware guest OS A 132 indicates to host OS 104 in step 196 that it does not have any work (via shared communications area B 132 or via a synthetic instruction, for example), host OS 104 determines whether there is a need for processor resources elsewhere and, if not, then host OS 104 allows guest OS A 132 to keep receiving processor resources which essentially enables guest OS A 132 to continue processing even though guest OS A 132 has no work to do at present and, thus, guest OS A 132 will enter a busy-wait loop at step 199 before returning to step 194 to see if there are more threads to execute. On the other hand, if host OS 104 determines that there is a need for processor resources elsewhere, then host OS 104, at stet 200, takes the processor resources for guest OS A 132 and temporarily gives them to another process running on host OS A 104 (such as another VM and guest operating system, e.g., guest OS B 134) before given them back to host OS A 104, effectively suspending guest OS A 132 until host OS 104 provides it with processor resources once again and then, at that time, guest OS A optionally continues to a busy-wait state (which is skipped for certain alternative embodiments) before proceeding back to step 194.

### Conclusion

The various systems, methods, and techniques described herein may be implemented with hardware or software or, where appropriate, with a combination of both. Thus, the methods and apparatus of the present invention, or certain aspects or portions thereof, may take the form of program code (i.e., instructions) embodied in tangible media, such as floppy di skettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computer will generally include a processor, a storage medium readable by the processor (including volatile and non-volatile memory and/or storage elements), at least one input device, and at least one output device. One or more programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

The methods and apparatus of the present invention may also be embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, the machine becomes an apparatus for practicing the invention. When implemented on a general-purpose processor, the program code combines with the processor to provide a unique apparatus that operates to perform the indexing functionality of the present invention.

## Claims

1. A method for an operating system to improve efficiency by reducing performance overhead when executing on a virtual machine, said method comprising determining (144; 182), by executing a synthetic instruction, if said operating system is executing on a virtual machine (108; 110) or directly on an x86 processor and, in the former case, said operating system modifying (150) its execution to operate more efficiently on said virtual machine or, in the latter case, said operating system executing as most efficient for a standard dedicated hardware environment,
wherein said operating system modifying its execution to operate more efficiently on said virtual machine comprises the utilization of at least one shared communication area (162; 164) between said operating system (132; 134) and a host operating system (104) to transfer information without transferring control,
wherein the shared communication area is used by the operating system to send additional information to the host operating system, which allows the host operating system to make more-efficient thread scheduling decisions,
wherein the additional information is information regarding the priority of a thread or the expected duration of time for a thread to run,
and wherein a synthetic instruction is an instruction that is illegal to the x86 architecture, but is understandable by the virtual machine

2. The method of claim 1 further comprising the utilization of at least one synthetic instruction that contains execution priorities to the host operating system.

3. The method of claim 1 wherein the more-efficient thread scheduling decisions are made by at least one scheduler (172) in the host operating system to more effectively allocate at least one processor resource.

4. A system for an operating system to improve efficiency by reducing performance overhead when executing on a virtual machine (108; 110), said system comprising at least one subsystem for determining (144; 182), by executing a synthetic instruction, if said operating system is executing on a virtual machine or directly on an x86 processor and, in the former case, said operating system modifying (150) its execution to operate more efficiently on said virtual machine or, in the latter case, said operating system executing as most efficient for a standard dedicated hardware environment,
further comprising at least one subsystem whereby said element of said operating system modifies its execution to operate more efficiently on said virtual machine by utilizing at least one shared communication area (162; 164) between said operating system (132; 134) and a host operating system (104) to transfer information without transferring control,
wherein the shared communication area is used by the operating system to send additional information to the host operating system, which allows the host operating system to make more-efficient thread scheduling decisions, wherein the additional information is information regarding the priority of a thread or the expected duration of time for a thread to run,
and wherein a synthetic instruction is an instruction that is illegal to the x86 architecture, but is understandable by the virtual machine.

5. The system of claim 4 further comprising at least one subsystem, and utilizing at least one synthetic instruction that contains execution priorities to the host operating system.

6. The system of claim 4 further comprising at least one subsystem whereby the more-efficient thread scheduling decisions are made by at least one scheduler (172) in the host operating system to more effectively allocate at least one processor resource.

7. A computer-readable medium comprising computer-readable instructions for an operating system to improve efficiency by reducing performance overhead when executing on a virtual machine (108; 110), said computer-readable instructions comprising instructions for determining (144; 182), by executing a synthetic instruction, if said operating system is executing on a virtual machine or directly on an x86 processor and, in the former case, said operating system modifying (150) its execution to operate more efficiently on said virtual machine or, in the latter case, said operating system executing as most efficient for a standard dedicated hardware environment,
further comprising instructions whereby said element of said operating system modifies its execution to operate more efficiently on said virtual machine by using of at least one shared communication area (162; 164) between said operating system (132; 134) and a host operating system (104) to transfer information without transferring control,
wherein the shared communication area is used by the operating system to send additional information to the host operating system, which allows the host operating system to make more-efficient thread scheduling decisions,
wherein the additional information is information regarding the priority of a thread or the expected duration of time for a thread to run,
and wherein a synthetic instruction is an instruction that is illegal to the x86 architecture, but is understandable by the virtual machine.

8. The computer-readable instructions of claim 7 further comprising using at least one synthetic instruction that contains execution priorities to the host operating system.

9. The computer-readable instructions of claim 7 further comprising instructions whereby the more-efficient thread scheduling decisions are made by at least one scheduler (172) in the host operating system (104) to more effectively allocate at least one processor resource.

## Patentansprüche

1. Ein Verfahren für ein Betriebssystem, durch Reduktion von Ausführungsmehraufwand die Effizienz zu erhöhen, wenn es auf einer virtuellen Maschine arbeitet,
wobei das Verfahren umfasst, durch Ausführung einer synthetischen Anweisung zu bestimmen (144; 182), ob das Betriebssystem auf einer virtuellen Maschine (108; 110) arbeitet oder direkt auf einem x86-Prozessor, wobei das Betriebssystem im ersten Fall seine Ausführung ändert (150) um effizienter auf der genannten virtuellen Maschine zu arbeiten oder das Betriebssystem im zweiten Fall so effizient wie für eine zugehörige Standard-Hardwareumgebung möglich arbeitet,
wobei das Ändern der Ausführung durch das Betriebssystem, um effizienter auf der virtuellen Maschine zu arbeiten, die Verwendung eines gemeinsamen Kommunikationsbereichs (162; 164) zwischen dem Betriebssystem (132; 134) und einem Host-Betriebssystem (104) beinhaltet, um Information zu übertragen ohne Kontrolle abzugeben,
wobei der gemeinsame Kommunikationsbereich vom Betriebssystem dazu verwendet wird, zusätzliche Information an das Host-Betriebssystem zu senden, was dem Host-Betriebssystem erlaubt, effizientere Terminierungsentscheidungen für Ausführungsstränge zu treffen,
wobei die zusätzliche Information solche Information ist, die die Priorität eines Ausführungsstrangs oder die erwartete Laufzeit eines Ausführungsstrangs betrifft,
und wobei eine synthetische Anweisung eine Anweisung ist, die für die x86-Architektur unzulässig ist, aber verständlich für die virtuelle Maschine.

2. Das Verfahren von Anspruch 1, das zusätzlich die Verwendung mindestens einer synthetischen Anweisung umfasst, die Ausführungsprioritäten für das Host-Betriebssystem enthält.

3. Das Verfahren von Anspruch 1, bei dem die effizienteren Terminierungsentscheidungen von mindestens einem Steuerungsprogramm (172) im Host-Betriebssystem getroffen werden, um effektiver mindestens ein Prozessorbetriebsmittel einzusetzen.

4. Ein System für ein Betriebssystem, um durch Reduktion von Ausführungsmehraufwand die Effizienz zu erhöhen, wenn es auf einer virtuellen Maschine arbeitet,
wobei das System
mindestens ein Untersystem umfasst, das dazu dient, durch Ausführung einer synthetischen Anweisung zu bestimmen (144; 182), ob das Betriebssystem auf einer virtuellen Maschine (108; 110) arbeitet oder direkt auf einem x86-Prozessor, und das Betriebssystem im ersten Fall seine Ausführung ändert (150), um effizienter auf der genannten virtuellen Maschine zu arbeiten, oder das Betriebssystem im zweiten Fall so effizient wie für eine zugehörige Standard-Hardwareumgebung möglich arbeitet,
und weiterhin mindestens ein Untersystem umfasst, mit dem das genannte Element des genannten Betriebssystems seine Ausführung durch die Verwendung eines gemeinsamen Kommunikationsbereichs (162; 164) zwischen dem Betriebssystem (132; 134) und einem Host-Betriebssystem (104) zum Übertragen von Information ohne Abgabe von Kontrolle ändert, um effizienter auf der virtuellen Maschine zu arbeiten,
wobei der gemeinsame Kommunikationsbereich vom Betriebssystem dazu verwendet wird, zusätzliche Information an das Host-Betriebssystem zu senden, was dem Host-Betriebssystem erlaubt, effizientere Terminierungsentscheidungen für Ausführungstränge zu treffen,
wobei die zusätzliche Information solche Information ist, die die Priorität eines Ausführungsstrangs oder die erwartete Laufzeit eines Ausführungsstrangs betrifft,
und wobei eine synthetische Anweisung eine Anweisung ist, die für die x86-Architektur unzulässig ist, aber verständlich für die virtuelle Maschine.

5. Das System von Anspruch 4, das weiterhin mindestens ein Untersystem umfasst und mindestens eine synthetische Anweisung verwendet, die Ausführungsprioritäten für das Host-Betriebssystem enthält.

6. Das System von Anspruch 4, das weiterhin mindestens ein Untersystem umfasst, mit dem die effizienteren Terminierungsentscheidungen von mindestens einem Steuerungsprogramm (172) im Host-Betriebssystem getroffen werden, um effektiver mindestens ein Prozessorbetriebsmittel einzusetzen.

7. Ein computerlesbares Medium mit computerlesbaren Anweisungen für ein Betriebssystem, durch Reduktion von Ausführungsmehraufwand die Effizienz zu erhöhen, wenn es auf einer virtuellen Maschine arbeitet,
wobei die computerlesbaren Anweisungen
Instruktionen einschließen, durch Ausführung einer synthetischen Anweisung zu bestimmen (144; 182), ob das Betriebssystem auf einer virtuellen Maschine (108; 110) arbeitet oder direkt auf einem x86-Prozessor, wobei das Betriebssystem im ersten Fall seine Ausführung ändert (150), um effizienter auf der genannten virtuellen Maschine zu arbeiten, oder das Betriebssystem im zweiten Fall so effizient wie für eine zugehörige Standard-Hardwareumgebung möglich arbeitet,
und weiterhin Instruktionen, mit denen das genannte Element des besagten Betriebssystems seine Ausführung dadurch zum effizienteren Arbeiten auf der virtuellen Maschine ändert, dass mindestens ein gemeinsamer Kommunikationsbereich (162; 164) zwischen dem Betriebssystem (132; 134) und einem Host-Betriebssystem (104) verwendet wird, um Information zu übertragen ohne Kontrolle abzugeben;
wobei der gemeinsame Kommunikationsbereich vom Betriebssystem dazu verwendet wird, zusätzliche Information an das Host-Betriebssystem zu senden, was dem Host-Betriebssystem erlaubt, effizientere Terminierungsentscheidungen für Ausführungsstränge zu treffen,
wobei die zusätzliche Information solche Information ist, die die Priorität eines Ausführungsstrangs oder die erwartete Laufzeit eines Ausführungsstrangs betrifft,
und wobei eine synthetische Anweisung eine Anweisung ist, die für die x86-Architektur unzulässig ist, aber verständlich für die virtuelle Maschine.

8. Die computerlesbaren Anweisungen von Anspruch 7, die zusätzlich die Verwendung mindestens einer synthetischen Anweisung umfassen, die Ausführungsprioritäten für das Host-Betriebssystem enthält.

9. Die computerlesbaren Anweisungen von Anspruch 7, die zusätzlich Instruktionen umfassen, durch die die effizienteren Terminierungsentscheidungen von mindestens einem Steuerungsprogramm (172) im Host-Betriebssystem getroffen werden, um effektiver mindestens ein Prozessorbetriebsmittel einzusetzen.

## Revendications

1. Procédé pour améliorer l'efficacité d'un système d'exploitation en réduisant le temps système lors de l'exécution sur une machine virtuelle, ledit procédé comprenant la détermination (144 ; 182), en exécutant une instruction synthétique, si ledit système d'exploitation s'exécute sur une machine virtuelle (108 ; 110) ou directement sur un processeur x86 et, dans le premier cas, ledit système d'exploitation modifiant (150) son exécution pour fonctionner plus efficacement sur ladite machine virtuelle ou, dans le second cas, ledit système d'exploitation s'exécutant de façon la plus efficace pour un environnement matériel dédié standard,
dans lequel ledit système d'exploitation modifiant son exécution pour fonctionner plus efficacement sur ladite machine virtuelle comprend l'utilisation d'au moins une zone de communication partagée (162 ; 164) entre ledit système d'exploitation (132 ; 134) et un système d'exploitation hôte (104) pour transférer des informations sans transférer de commande,
dans lequel la zone de communication partagée est utilisée par le système d'exploitation pour envoyer des informations supplémentaires au système d'exploitation hôte, ce qui permet au système d'exploitation hôte de prendre des décisions de planification de fil plus efficaces,
dans lequel les informations supplémentaires sont des informations concernant la priorité d'un fil ou la durée attendue pour qu'un fil s'exécute,
et dans lequel une instruction synthétique est une instruction qui est illégale pour l'architecture x86, mais qui est compréhensible par la machine virtuelle.

2. Procédé selon la revendication 1, comprenant en outre l'utilisation d'au moins une instruction synthétique qui contient des priorités d'exécution pour le système d'exploitation hôte.

3. Procédé selon la revendication 1, dans lequel les décisions de planification de fil plus efficaces sont prises par au moins un planificateur (172) dans le système d'exploitation hôte pour attribuer plus efficacement au moins une ressource de processeur.

4. Système pour améliorer l'efficacité d'un système d'exploitation en réduisant le temps système lors de l'exécution sur une machine virtuelle (108 ; 110), ledit système comprenant au moins un sous-système pour déterminer (144 ; 182), en exécutant une instruction synthétique, si ledit système d'exploitation s'exécute sur une machine virtuelle ou directement sur un processeur x86 et, dans le premier cas, ledit système d'exploitation modifiant (150) son exécution pour fonctionner plus efficacement sur ladite machine virtuelle ou, dans le second cas, ledit système d'exploitation s'exécutant de façon la plus efficace pour un environnement matériel dédié standard, comprenant en outre au moins un sous-système de sorte que ledit élément dudit système d'exploitation modifie son exécution pour fonctionner plus efficacement sur ladite machine virtuelle en utilisant au moins une zone de communication partagée (162 ; 164) entre ledit système d'exploitation (132 ; 134) et un système d'exploitation hôte (104) pour transférer des informations sans transférer de commande,
dans lequel la zone de communication partagée est utilisée par le système d'exploitation pour envoyer des informations supplémentaires au système d'exploitation hôte, qui permet au système d'exploitation hôte de prendre des décisions de planification plus efficaces,
dans lequel les informations supplémentaires sont des informations concernant la priorité d'un fil ou la durée attendue pour qu'un fil s'exécute,
et dans lequel une instruction synthétique est une instruction qui est illégale pour l'architecture x86, mais qui est compréhensible par la machine virtuelle.

5. Système selon la revendication 4, comprenant en outre au moins un sous-système, et utilisant au moins une instruction synthétique qui contient des priorités d'exécution pour le système d'exploitation hôte.

6. Système selon la revendication 4, comprenant en outre au moins un sous-système par lequel les décisions de planification de fil plus efficaces sont prises par au moins un planificateur (172) dans le système d'exploitation hôte pour attribuer plus efficacement au moins une ressource de processeur.

7. Support lisible par ordinateur comprenant des instructions lisibles par ordinateur pour améliorer l'efficacité d'un système d'exploitation en réduisant le temps système en s'exécutant sur une machine virtuelle (108 ; 110), lesdites instructions lisibles par ordinateur comprenant des instructions pour déterminer (144 ; 182), en exécutant une instruction synthétique, si ledit système d'exploitation s'exécute sur une machine virtuelle ou directement sur un processeur x86 et, dans le premier cas, ledit système d'exploitation modifiant (150) son exécution pour fonctionner plus efficacement sur ladite machine virtuelle ou, dans le second cas, ledit système d'exploitation s'exécutant de façon la plus efficace pour un environnement matériel dédié standard,
comprenant en outre des instructions de sorte que ledit élément dudit système d'exploitation modifie son exécution pour fonctionner plus efficacement sur ladite machine virtuelle en utilisant au moins une zone de communication partagée (162 ; 164) entre ledit système d'exploitation (132 ; 134) et un système d'exploitation hôte (104) pour transférer des informations sans transférer de commande,
dans lequel la zone de communication partagée est utilisée par le système d'exploitation pour envoyer des informations supplémentaires au système d'exploitation hôte, ce qui permet au système d'exploitation hôte de prendre des décisions de planification de fil plus efficaces,
dans lequel les informations supplémentaires sont des informations concernant la priorité d'un fil ou la durée attendue pour qu'un fil s'exécute,
et dans lequel une instruction synthétique est une instruction qui est illégale pour l'architecture x86, mais qui est compréhensible par la machine virtuelle.

8. Instructions lisibles par ordinateur selon la revendication 7, comprenant en outre l'utilisation d'au moins une instruction synthétique qui contient des priorités d'exécution pour le système d'exploitation hôte.

9. Instructions lisibles par ordinateur selon la revendication 7, comprenant en outre des instructions par lesquelles les décisions de planification de fil plus efficaces sont prises par au moins un planificateur (172) dans le système d'exploitation hôte (104) pour attribuer plus efficacement au moins une ressource de processeur.
